# EUROPÄISCHE PATENTANMELDUNG

(11) **EP 1 538 385 A1**
(43) Veröffentlichungstag der Anmeldung: **08.06.2005**
(21) Anmeldenummer: 04027959.8
(22) Anmeldetag: 25.11.2004
(51) Int. Cl.: F16L 37/56, F16L 39/00

(54) **Schnellkupplung zum Verbinden von koaxialen Rohrleitungen**

(30) Priorität: 02.12.2003 IT mi20032348
(71) Anmelder: Faster S.p.A., 26027 Rivolta d'Adda (Cr) (IT)
(72) Erfinder: Arosio, Massimo, 24047 Treviglio (Bergamo) (IT)
(74) Vertreter: Mayer, Hans Benno, Dipl.-Ing.

(57) **Zusammenfassung**

Flachbett-Schnellkupplung, zum Verbinden von Rohrleitungen, die zwischen einem Verbraucher eines unter Druck stehenden Fluids und einer Vorrichtung zum Zuführen dieses Fluids angeordnet sind, wobei mit dem rohrförmigen Kupplungsteil (1) der Schnellkupplung (2) und dem stabförmigen Kupplungsteil (12) der Schnellkupplung (2) konzentrisch angeordnete Rohrleitungen (5,10,15,20) verbindbar sind, um eine Zuführleitung und eine Rücklaufleitung für ein Fluid zu schaffen, wobei die Durchflüsse, die von den konzentrisch angeordneten Rohrleitungen (5,10,15,20) begrenzt sind, mit einer Zuführleitung (7,17) bzw. mit einer Rücklaufleitung (17,37) verbunden sind und im Inneren der Kupplungsteile (1,12) vorgesehen sind. Diese Zuführ- (7,17) und Rücklaufleitungen (17,37) stehen nach Zusammenführen des rohrförmigen Kupplungsteils (1) mit dem stabförmigen Kuppplungsteil (12) in Wirkverbindung.

## Beschreibung

Die vorstehende Erfindung betrifft eine Flachbett-Schnellkupplung zum Verbinden von Rohrleitungen, die zwischen einem Verbraucher eines unter Druck stehenden Fluids und einer Zuführvorrichtung des unter Druck stehenden Fluids angeordnet sind.

Es ist aus dem Stand der Technik bekannt geworden, Schnellkupplungen zum Verbinden von elastischen Rohrleitungen einzusetzen, die mit einem Verbraucher verbunden sind, z.B. mit Antriebsvorrichtungen, die z.B. an einer landwirtschaftlich genutzten Maschine oder einer Maschine für den Bausektor angebracht sind, z.B. einer Planierraupe oder einem Bagger.

In diesen Maschinen werden elastische Rohrleitungen eingesetzt, die es ermöglichen, über ein Zuflussrohr ein Fluid, z.B. Öl, unter hohem Druck an einen Verbraucher zu leiten, z.B. eine Kolben-Zylindereinheit oder einen hydraulischen Motor.

Um dem Fluid zu ermöglichen, von einem Verbraucher zu einer Druckquelle zurückzufließen, z.B. einer Pumpe, ist es unumgänglich, auch eine Rohrleitung für den Rückfluss des Fluids vorzusehen.

Aus dem Stand der Technik ist bekannt geworden, zwei getrennte elastische Rohrleitungen zu verwenden, die an ihren Enden Schnellkupplungen tragen, um eine Verbindung zwischen dem Verbraucher und einer Druckquelle zu ermöglichen.

In vielen Fällen ist es unumgänglich, das Zulaufrohr sowie das Rücklaufrohr für das Fluid von einem Verbraucher abzukuppeln, z.B. dann, wenn eine bestimmte Vorrichtung ausgetauscht werden soll oder um Wartungsarbeiten an dieser Vorrichtung durchzuführen.

Berücksichtigt man, dass es in der Vergangenheit unumgänglich war, zwei getrennte Rohrleitungen einzusetzen, wobei eine Rohrleitung für den Zulauf des Fluids und eine Rohrleitung für den Rücklauf des Fluids vorgesehen waren, und berücksichtigt man ferner, dass die Verbindungsarbeiten der Rohrleitungen häufig an Orten durchzuführen waren, die einer starken Verschmutzung unterlagen, berücksichtigt man ferner, dass die Verbindungen der Rohrleitungen für den Zufluss eines unter Druck stehenden Fluids häufig mit erheblicher Geschwindigkeit durchzuführen waren, ergab sich die Gefahr, dass die Rohrleitung für den Zufluss des Fluids in unrichtiger Weise mit der Kupplung für den Rücklauf des hydraulischen Fluids oder umgekehrt verbunden wurden, was die Gefahr in sich barg, dass Fehlfunktionen in der Hilfsvorrichtung auftraten oder nicht heilbare Schäden an dieser Vorrichtung auftraten.

Schließlich sei nochmals als Nachteil der bekannten Schnellkupplungen angeführt, dass im Falle eines Zulaufrohres, das von einem Rücklaufrohr getrennt vorgesehen war, jeweils zwei Paare von Schnellkupplungen vorzusehen waren, Tatsache, die zu einer Verteuerung der Hydraulikanlage führte.

Aufgabe der vorliegenden Erfindung ist es, die Nachteile des Standes der Technik zu vermeiden und den Einsatz einer einzigen Schnellkupplung zu ermöglichen, sowohl zum Anschließen einer Zulaufleitung als auch zum Anschließen einer Rücklaufleitung für das unter Druck stehende Fluid; gleichzeitig soll ein rasches und einfaches Verbinden der Bauteile ermöglicht werden und strikt Fehler beim Anschließen der elastischen Leitung vermieden werden.

Diese Aufgabe wird mit einer Flachbett-Schnellkupplung zum Verbinden von elastischen Rohren, die zwischen einem Verbraucher eines unter Druck stehenden Fluids und einer Vorrichtung zum Zuführen des Fluids angeordnet ist, dadurch erreicht, dass mit dem rohrförmigen Bauteil der Flachschnellkupplung und mit dem stabförmigen Bauteil der Flachschnellkupplung konzentrische Rohre miteinander verbunden sind, um eine Zuführleitung und eine Rücklaufleitung für das hydraulische Fluid zu schaffen, und dass die Leitungen, die von den konzentrisch angeordneten Rohrleitungen begrenzt werden, mit einer Zuflussleitung bzw. mit einer Rücklaufleitung für das Fluid in Verbindung stehen, und im Inneren eines rohrförmigen Bauteiles sowie eines stabförmigen Bauteiles angeordnet sind, und dass diese Leitungen nach gegenseitigem Verbinden der Kupplungen in gegenseitiger Wirkverbindung stehen.

Die Erfindung wird nun genauer beschrieben und anhand eines Ausführungsbeispieles in den beigefügten Zeichnungen dargestellt:
Figur 1 zeigt in Ansicht und teilweise im Schnitt das rohrförmige Teil der neuen Schnellkupplung.
Figur 2 zeigt teilweise in Ansicht und teilweise im Schnitt das stabförmige Bauteil der neuen Schnellkupplung.
Figur 3 zeigt teilweise im Schnitt und teilweise in einer Ansicht die einzelnen Bauteile der Schnellkupplung bei Beginn des Zusammenfügevorganges.
Figur 4 zeigt teilweise im Schnitt und teilweise in Ansicht die Bauteile der Schnellkupplung nach vollständigem Zusammenfügen.
Figur 5 zeigt die Bauteile der Schnellkupplung am Ende des Zusammenfügevorganges mit geöffneten Leitungen, um einen Durchfluss des hydraulischen Fluids zu ermöglichen.

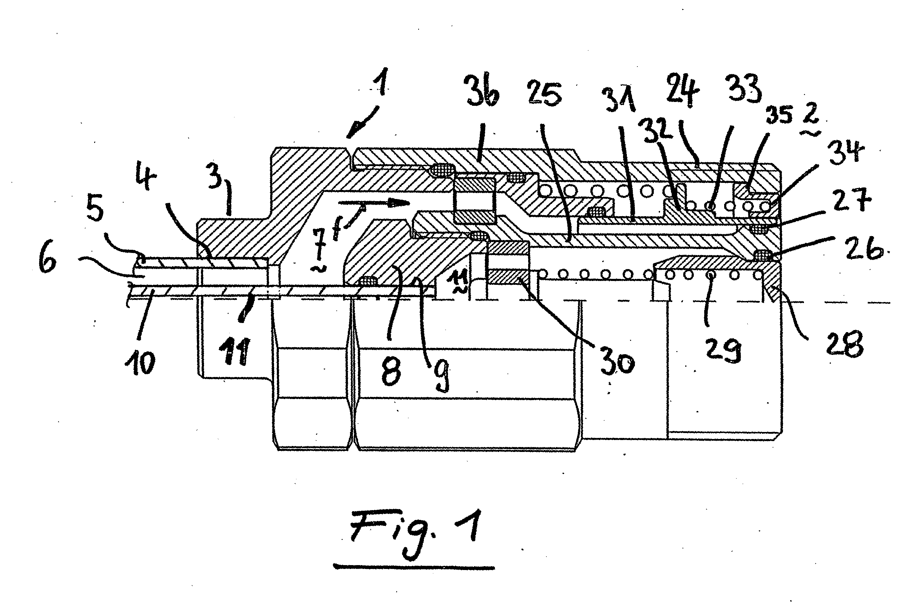

Wie der Figur 1 zu entnehmen ist, weist das rohrförmige Bauteil 1 der Schnellkupplung in Flachausführung, die gesamthaft mit 2 gekennzeichnet ist, einen Anschluss 3 auf, der eine innenliegende Ausnehmung 4 aufweist, die zur Aufnahme des Endstückes eines elastischen Rohres 5 dient, das eine erste ringförmig ausgebildete Leitung 6 begrenzt.

Die Leitung 6 steht mit einer Leitung 7 in Wirkverbindung, die ist im Inneren des Kupplungsstückes 1 ausgebildet ist.

Im Inneren des Kupplungsstückes 1 ist eine Hülse 8 vorgesehen, die eine Kammer 9 begrenzt, in die das Endstück eines zweiten elastischen Rohres 10 eingeführt werden kann, dieses Rohrstück 10 mündet in eine Leitung 11, die im Inneren des Bauteiles 1 ausgebildet ist.

Die Rohre 5 und 10 für die Zuleitung und den Rücklauf des Fluids sind koaxial zueinander angeordnet.

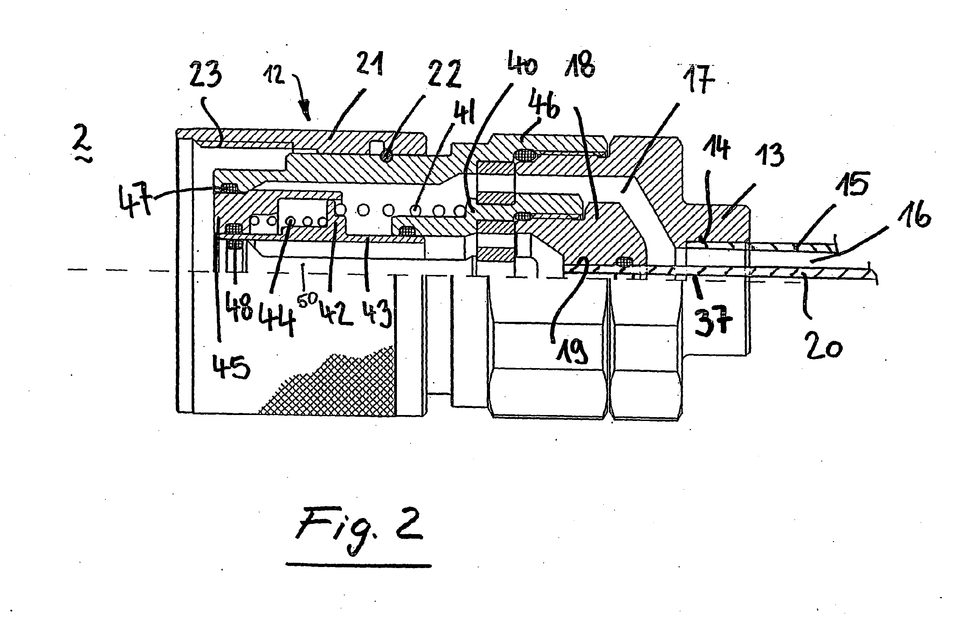

Der Figur 2 kann teilweise in einer Schnittdarstellung und teilweise in Ansicht das stabförmige Bauteil 12 der Schnellkupplung, die gesamthaft mit 2 gekennzeichnet ist, entnommen werden.

Die Schnellkupplung 2 weist einen Anschluss 13 auf, der eine innenliegende Kammer 14 begrenzt, die ein elastisch ausgebildetes Rohr 15 aufnimmt, welches eine erste Leitung 16 für den Zulauf eines hydraulischen Fluids bildet, das in eine Leitung 17 mündet, die von einem Einsatzstück 18 begrenzt ist, welches eine Kammer 19 aufweist, in die der Anschluss eines weiteren elastischen Rohrstückes 20 hineinragt und eine weitere Leitung 37 begrenzt.

Das Bauteil 12 nimmt verdrehbar eine Überwurfmutter 21 auf, die in Längsrichtung durch einen Federring 22 in ihrer Lage festgelegt wird.

Die drehbar angeordnete Überwurfmutter 21 weist an der Vorderseite ein innenliegendes Gewinde 23 auf, um ein Verbinden zwischen den beiden Bauteilen der Schnellkupplung 1, 12 zu ermöglichen, sobald die Überwurfmutter 21 auf dem Außengewinde 24 der Kupplung 1 aufgeschraubt wird.

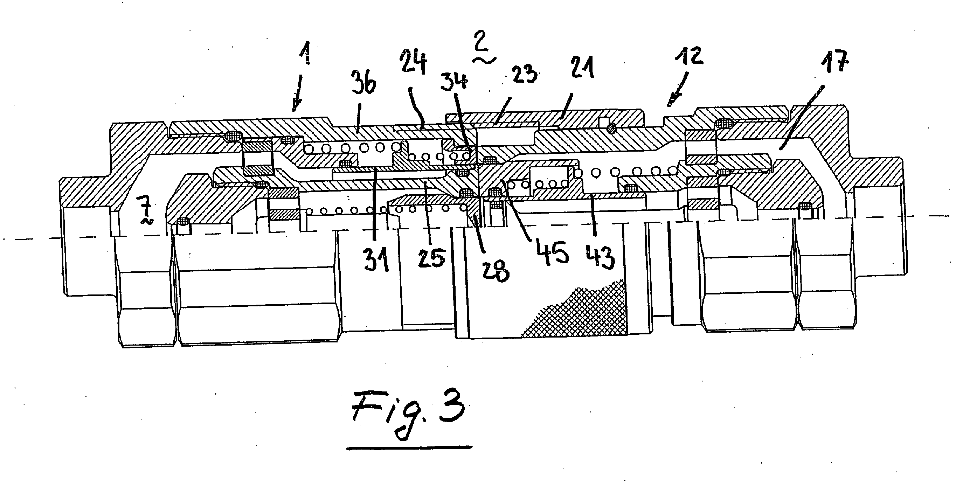

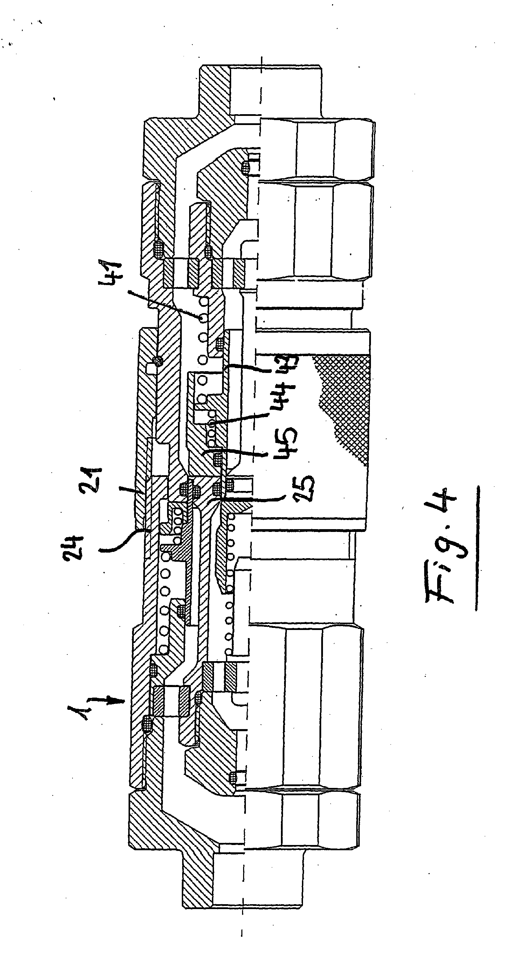

Die Verbindungsvorgänge zwischen der Kupplung 1 und der Kupplung 12 sind in den Figuren 3, 4 und 5 dargestellt.

Der Figur 1 kann ferner entnommen werden, dass die Kupplung 1 einen innenliegenden rohrförmigen Schaft 25 aufweist, der ortsfest angeordnet ist und als solcher aus dem Stand der Technik bekannt ist.

Der rohrförmige Schaft 25 dient als Trenneinrichtung für die Leitungen 7, 11. Der Schaft 25 weist an seiner Vorderseite eine Verdickung auf, die eine innenliegende ringförmige Dichtung aufnimmt, die mit 26 gekennzeichnet ist, sowie eine äußere ringförmige Dichtung, die mit 27 gekennzeichnet ist.

Mit der innenliegenden Dichtung 26 steht ein rohrförmiges Bauteil 28 in Verbindung, dieses Bauteil ist verschiebbar angeordnet und wird von einer vorgespannten Feder 29 belastet, die an einer gelochten Hülse 30 anliegt, die mit dem Ende des Schaftes 25 fest verbunden ist.

An der außenliegenden ringförmigen Dichtung 27 liegt ein verschiebbares, rohrförmiges Bauteil 31 an, welches mit einer sich in Umfangsrichtung erstreckenden Verdickung 32 ausgebildet ist, an der eine Feder 33 anliegt, die an ihrer Vorderseite von einem verschiebbaren Kranz 34 umgeben wird, die an der Stelle 35 an einem rohrförmigen äußeren Körper 36 der Kupplung 1 zum Anliegen kommt.

Der Figur 2 kann entnommen werden, dass das stabförmige Kupplungsteil 12 in seinem Inneren unter Zuhilfenahme einer Verdickung 18 ein rohrförmiges Bauteil 40 aufnimmt, das ortsfest angeordnet ist.

An diesem rohrförmigen Bauteil 40 liegt eine Feder 41 an, an der eine Verdickung 42 anliegt, die Bestandteil eines rohrförmigen Bauteiles 43 ist, welches in Axialrichtung verschiebbar angeordnet ist und welches an der Vorderseite von einer Feder 44 umgeben wird, an der ein weiteres rohrförmiges Bauteil 45 anliegt.

Zwischen dem rohrförmigen Bauteil 43 und dem Bauteil 45 sowie dem vorderen Ende des Bauteiles 46 sind mehrere Dichtungsringe angeordnet, die mit 47 und 48 gekennzeichnet sind.

Die Bauteile 42, 43 und 45 werden in genauer Lage durch einen mittig angeordneten Schacht 50 gehalten.

Zu Beginn des Zusammefügevorganges der Kupplungsteile 1 und 12, wie dies in Figur 3 dargestellt ist, wird das Gewindestück 23 der drehbar angeordneten Überwurfmutter 21 mit dem Außengewinde 24 des Rohrkörpers 36 in Wirkverbindung gebracht.

Alle verschiebbar angeordneten Bauteile 34, 28 und 31 sowie 45 und 43, lediglich um ein Beispiel anzuführen, befinden sich noch in ihrer ursprünglichen Lage und die Leitungen 7 bzw. 17 sind noch abgesperrt, aus diesem Grunde tritt kein Fluss des hydraulischen Fluids weder in Zuführrichtung noch in Rücklaufrichtung ein.

Durch weiteres Aufschrauben der Überwurfmutter 21 auf dem Gewindestück 24 wird dem Schacht 25 eine Rückwärtsverschiebung des Rohrkörpers 45 gegen die Wirkung der Feder 44, die vorgespannt ist, eingeleitet. Gleichzeitig wird auch eine Rückwärtsverschiebung des Rohrkörpers 43 gegen die Wirkung der Feder 41 eingeleitet, auch diese Feder ist vorgespannt.

Diese Wirkung wird dadurch erreicht, dass ein Verschieben des rohrförmigen Bauteils 45 über den Schaft 25 erfolgt, der Teil der Kupplung 1 darstellt. Gleichzeitig wird das rohrförmige Bauteil 43 längs des Schaftes 50 verschoben, der Schaft ist ortsfest im Inneren des Kupplungsteiles 12 angeordnet, es erfolgt ein Verschieben des Bauteiles in Axialrichtung und ein Öffnen der Leitung 9.

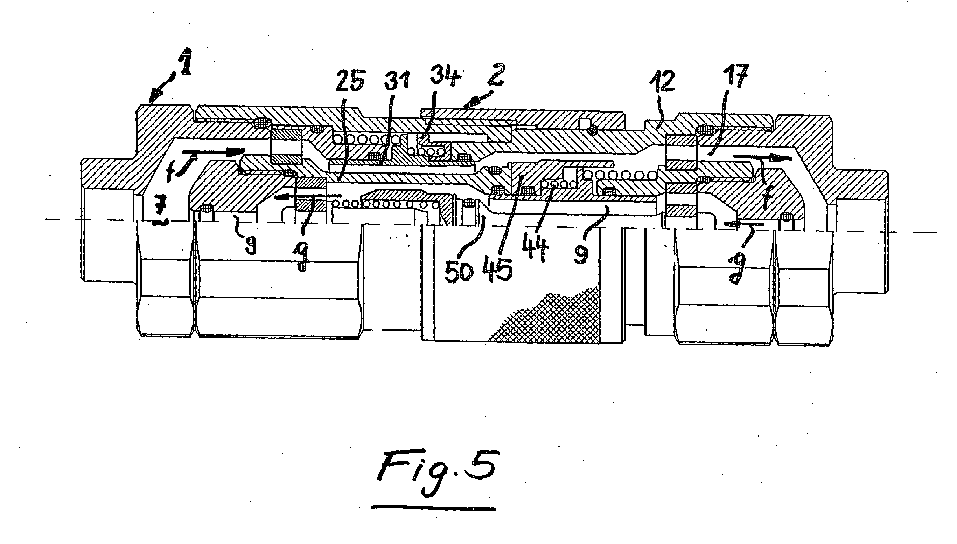

In Figur 5 ist das Kupplungsstück 1 vollständig mit dem Kupplungsstück 12 verbunden.

Dank der Wirkung des ortsfest angeordneten Schachtes 25 wurde das Bauteil 45 nach rückwärts verschoben und zwar gegen die Wirkung der Feder 44, diese wird somit vorgespannt und dank der Wirkung des Bauteiles 46 erfolgt auch ein Verschieben der Überwurfmutter 34 sowie des rohrförmigen Körpers 31 in Richtung des rückwärtigen Teiles der Kupplung 1, wodurch die Leitung 7 freigelegt wird und ein ungehindertes Fließen des hydraulischen Fluids in der Leitung 7 in Richtung der Pfeile (f) gemäß Figur 5 erfolgt.

Gleichzeitig wird durch vollständiges Öffnen der Leitung 9 ein Rücklauf des Fluids ermöglicht, wie dies in Figur 5 mit den Pfeilen (g) dargestellt ist.

Somit wird bei Verwendung einer einzigen Schnellkupplung 2, die aus den Bauteilen 1 und 12 besteht, erstmalig die Verwendung von konzentrisch angeordneten Rohrleitungen 5, 10 möglich und folglich eröffnet sich die Möglichkeit eines Zuflusses und eines Rückflusses des Fluids durch das Innere einer einzigen Schnellkupplung.

## Patentansprüche

1. Flachbett-Schnellkupplung, zum Verbinden von elastischen Rohrleitungen, die zwischen einem Verbraucher eines unter Druck stehenden Fluids und einer Vorrichtung zum Zuführen des Fluids angeordnet ist, **dadurch gekennzeichnet, dass** mit einem rohrförmigen Bauteil (1) einer Schnellkupplung (2) und mit dem schachtartigen Bauteil (12) einer Schnellkupplung konzentrisch angeordnete Rohrleitungen (5, 10, 15, 20) verbunden sind, um eine Zulaufleitung (6, 16) und eine Rücklaufleitung (11, 37) für ein Fluid zu schaffen, wobei die von den konzentrisch angeordneten Rohrleitungen (5, 10, 15, 20) begrenzten Durchflüsse mit einer Zuführleitung bzw. mit einer Rücklaufleitung des Fluids in Wirkverbindung stehen, die im Inneren eines rohrförmigen Kupplungsteiles (1) sowie eines schaftartigen Kupplungsteiles (12) gebildet sind, und dass die Leitungen (7, 17) nach gegenseitigem Verbinden der Kupplungsteile (1, 12) in gegenseitiger Wirkverbindung zueinander stehen.

2. Flachbett-Schnellkupplung, nach Patentanspruch 1, **dadurch gekennzeichnet, dass** das Bauteil 12 drehbar eine Überwurfmutter (21) aufnimmt, die in axialer Stellung unter Zuhilfenahme eines Federringes (22) in ihrer Lage festgelegt ist und die Überwurfmutter (21) an ihrer Vorderseite ein Innengewinde (23) aufweist, das mit einem Gewinde (24) des Kupplungsteiles (1) verbindbar ist.

3. Flachbett-Schnellkupplung, nach Patentanspruch 1, **dadurch gekennzeichnet, dass** das schaftartige Bauteil (25) als Führungsteil für ein verschiebbares rohrförmiges Bauteil (31) dient, das mit einer sich in Umfangsrichtung erstreckenden Verdickung (32) versehen ist, gegen das eine Feder (33) anliegt, die an ihrer Vorderseite von einem verschiebbar angeordneten Kranz (34) umgeben ist, und dieser Kranz (34) mit einem äußeren rohrförmigen Bauteil (36) der Kupplung (1) in Anschlag kommt.

4. Flachbett-Schnellkupplung, nach Patentanspruch 1, **dadurch gekennzeichnet, dass** das schaftartige Bauteil (12) an seiner Innenseite unter Zuhilfenahme einer Verdickung (18) ein rohrförmiges Bauteil (40) aufnimmt, welches ortsfest angeordnet ist und am rohrförmigen Bauteil (40) eine Feder (41) anliegt, an der eine Verdickung (42) eines rohrförmigen Bauteiles (43), das in Axialrichtung verschiebbar ist, zur Anlage kommt und an seiner Vorderseite von einer Feder (44) umgeben ist, gegen die ein weiteres rohrförmiges Bauteil (45) anliegt.
